# EUROPEAN PATENT SPECIFICATION

(11) **EP 2 392 506 B1**
(45) Date of publication and mention of the grant of the patent: **08.05.2013**
(21) Application number: 10164704.8
(22) Date of filing: 02.06.2010
(51) Int. Cl.: B62D 51/02, B62D 51/04, B66F 9/075, B60R 21/34, B66F 17/00

(54) **Industrial truck comprising a movable foot guard**
Flurförderzeug mit beweglichem Fußschutz
Chariot de manutention comprenant un garde-pied amovible

(43) Date of publication of application: 07.12.2011
(73) Proprietor: BT Products AB, 595 81 Mjölby (SE)
(72) Inventor: Seger, Magnus, 590 77, Vreta Kloster (SE)
(74) Representative: Börlin, Maria

(56) References cited:
- EP-A1- 2 014 605
- FR-A1- 2 406 602
- GB-A- 1 346 032

## Description

### TECHNICAL FIELD

The present invention relates to an industrial truck according to the preamble of claim 1.

### BACKGROUND ART

Industrial trucks of the type that can be steered by a driver that walks behind the truck may comprise a foot guard. The foot guard protects the feet of the driver from being overrun or pinched by the truck when the driver operates the truck while standing on the ground behind the truck.

Document US 5653568 A1 shows an industrial truck according to the preamble of claim 1 which comprises a foot guard that is fixed on a lower rear part of the truck's chassis. The guard is arranged to close the pinch point between the chassis of the truck and the floor and minimizes thereby the possibility of the truck overrunning the foot of the driver.

One problem with the known truck is that the foot guard is subjected to wear. The wear may occur from unevenness's on the floor that the truck is driven on. Wear may also be caused from debris, such as pieces of wood from broken pallets that lies on the floor. A further problem is that the known truck is difficult to manoeuvre over obstacles, for example warehouse doorsteps or on ramps into lorries, since the foot guard may get stuck on such obstacles.

Thus, it is an object of the present invention to provide an industrial truck with a foot guard, in which the problems mentioned above are solved or at least reduced to a minimum.

### SUMMARY OF THE INVENTION

According to the invention as defined by the independent claim this object is achieved by an industrial truck, comprising a driver's platform, wherein the truck can be operated by a driver from the platform or from a position on the ground, further comprising a foot guard for protecting the feet of the truck driver from being overrun or pinched by the truck, characterized in that, the foot guard is movable between a first raised position and a second lowered position in which the foot guard protects the feet of the truck driver.

Since the foot guard is movable, its position can be optimized with regard to the position of the driver. When the driver is present on the truck the foot guard can be raised. The ground clearance between the foot guard and the ground is thereby increased which minimizes wear to the foot guard and increases maneuverability of the truck. When the driver is operating the truck from a position on the ground, the foot guard can be lowered so that the feet of the driver are protected from being pinched or overrun by the truck.

According to a first preferred embodiment, the platform is pivotally attached to the truck by a shaft, so that the platform is pivotal from an upright position to a horizontal position, wherein the foot guard is coupled to the shaft of the platform such that the foot guard is moved to the lowered position when the platform is pivoted to the upright position and such that the foot guard is moved to the raised position when the platform is pivoted to the horizontal position.

The coupling of the foot guard to the shaft of the platform is a robust and reliable way of ensuring that the foot guard always is in a correct position with regard to the operating mode of the truck. Therefore, when the driver walks behind the truck, i.e. the platform is upright, the foot guard is in a position where the drivers feet are protected. When the driver stands on the platform, which then is in a horizontal position, there is no need for foot protection and the foot guard is raised such that the clearance between the foot guard and the ground is increased.

Preferably, the foot guard and the shaft comprise corresponding coupling means for coupling the foot guard to the shaft.

According to an alternative, the coupling means comprises intermeshing gears.

Preferably, the coupling means comprise at least one gear wheel arranged on the shaft and at least one toothed bar arranged on the foot guard.

According to a second embodiment, the foot guard is coupled to the shaft by a linkage.

According to a third embodiment, the foot guard is coupled to the shaft by a cord.

According to a further alternative the truck may comprise a presence sensor for detecting if a driver is present on the platform and a motor arranged to move the foot guard between the raised and lowered position in dependency of signals from the presence sensor.

According to a further alternative, wherein the platform is pivotally attached to the truck, the truck may comprise a position sensor for detecting the position of the pivotal platform and a motor arranged to move the foot guard between the raised and lowered position in dependency of signals from the position sensor.

According to yet a further alternative the truck may comprise a motor arranged to move the foot guard between the raised and lowered position and a control means that is connected to the motor so that the motor can be manually controlled by the driver.

According to a further alternative, the lower front edge of the foot guard is beveled.

The foot guard may be arranged to slide in the vertical direction, when subjected to a vertical upwards directed force on its lower surface.

Preferably, the truck comprises a housing that comprises a space for receiving the foot guard.

### BRIEF DESCRIPTION OF THE DRAWINGS

Figure 1 is a perspective view of an industrial truck according to a first preferred embodiment of the invention showing the platform in a raised position and the foot guard in a lowered position.
Figure 2 is a perspective view of the industrial truck of the first preferred embodiment, showing the platform in a lowered position and the foot guard in a raised position.
Figure 3 is an exploded view of the platform, and parts relating to the foot guard of the first preferred embodiment of the truck according to the invention.
Figure 4 shows in detail an assembly comprising a raised platform and lowered foot guard of the truck according to the first embodiment.
Figure 5 shows in detail the assembly comprising a lowered platform and raised foot guard.
Figure 6a, 6b shows schematically a second embodiment of the invention.
Figure 7a, 7b shows schematically a third embodiment of the invention.

### DETAILED DESCRIPTION

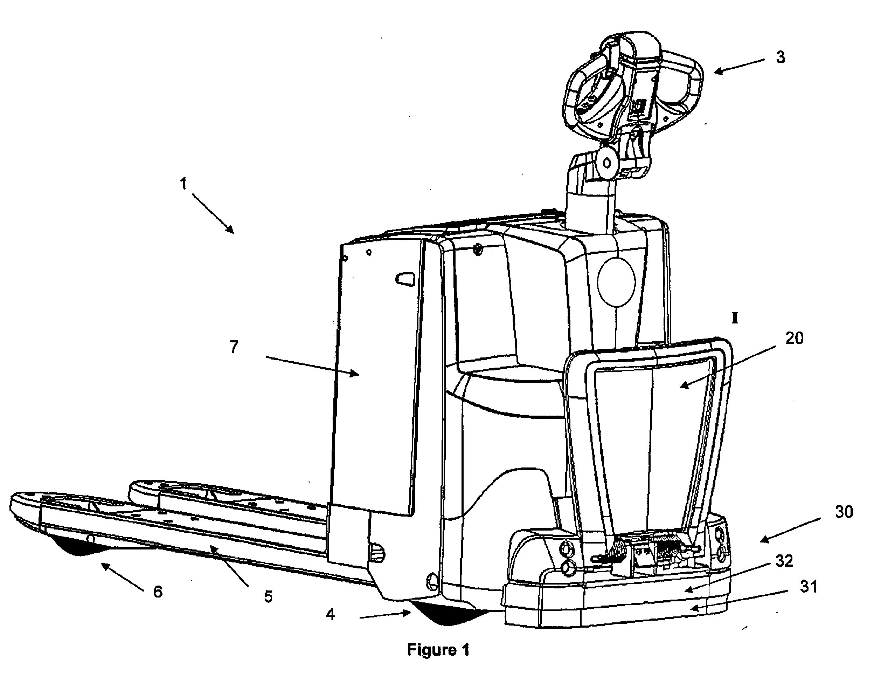

Figure 1 illustrates schematically an industrial truck 1 according to the invention. The truck illustrated in figure 1 is of a type which can be manoeuvred by a driver that stands on a platform on the truck or that stands or walks on the ground beside or behind the truck. This truck type is typically known as a tiller arm truck or also as stacker or order-pick truck. Since this truck type is generally known in the art its features will only be described briefly.

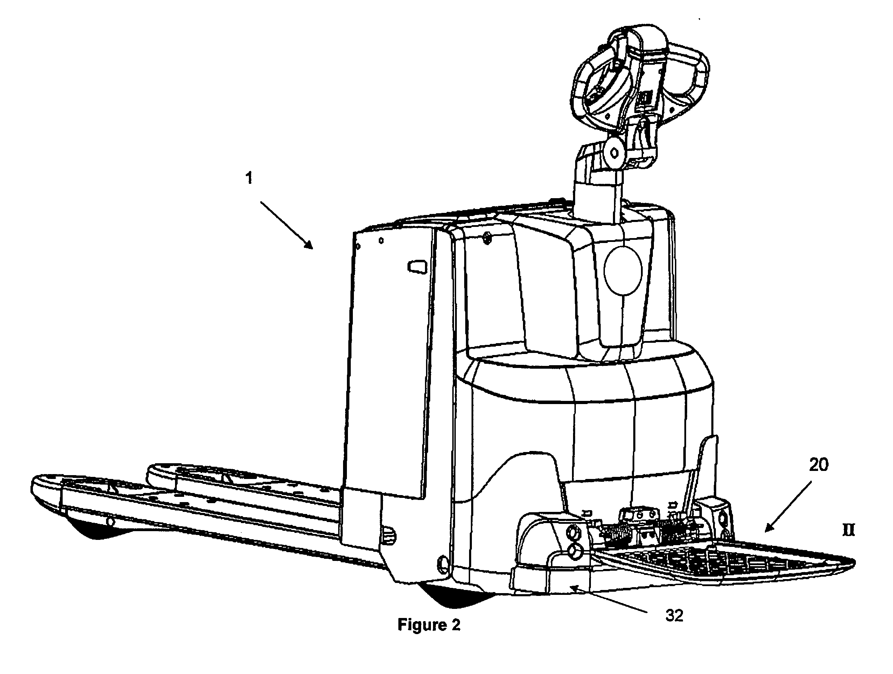

The truck comprises a housing 7 in which the motor, the hydraulics and the control system of the truck are located (these parts are not shown in figure 1). The truck further comprises a drive wheel 4 which is propelled by the motor, forward support wheels 6 which are arranged under support arms 5 that can be raised and lowered. The truck could also comprise lifting forks (not shown) that are arranged in a lifting frame such that the forks can be raised to various heights. The truck 1 further comprises a driver's platform 20 which is pivotally attached to the rear of the chassis of the truck so that the platform is pivotal between an upright position I and a lowered, horizontal position II (horisontal position II is shown in figure 2). The platform may also be fixed, thus is not pivotal. One example of such an arrangement is a so called driver's booth. A steering and control means 3 e.g. a tiller arm is arranged such that the driver can steer and operate the truck while walking behind the truck or while standing on the platform when the platform is pivoted into a lowered position.

Figure 1 further shows a foot guard arrangement 30. The foot guard arrangement 30 comprises a foot guard housing 32 and a foot guard 31. By "foot guard" is intended an element that protects the foot or feet of the driver from being run over or pinched by the truck, the foot guard may also be referred to as foot protection element. The foot guard housing 32 and the foot guard 31 extends over the rear portion of the truck and also covers a portion of the sides of the truck e.g. the curved portion between the sides and rear of the truck.

Above and in the following is, with regard to the position of the pivotal platform, by "horizontal position" meant that the platform is parallel to the ground, when the truck is positioned on even ground. By upright position" is meant that the platform is essential parallel to the motor housing of the truck.

In figure 1 the foot guard 31 is in the lowered position. In this position the foot guard covers the gap between the truck and the ground so that the feet of the driver are protected from getting run over or pinched in the gap between the truck and the ground. Figure 2 shows the platform 20 in a lowered horizontal position and the foot guard in a raised position where the foot guard is retracted into the foot guard housing 32.

In the following the parts of the truck that are relevant to the foot guard arrangement will be described in detail.

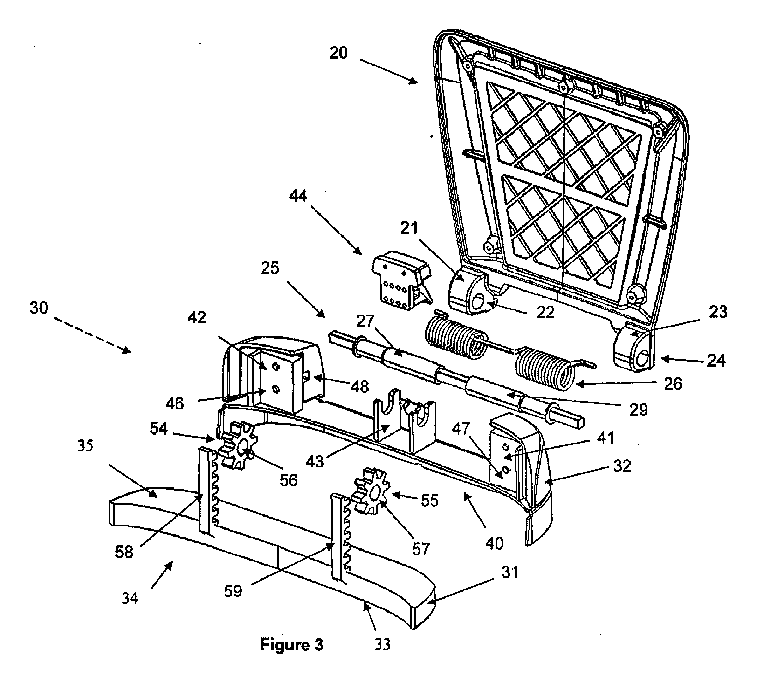

Figure 3 shows in an exploded view the parts of the truck that are relevant for the first preferred embodiment of the invention i.e. a foot guard arrangement 30 for protecting the feet of the driver from being pinched between the chassis of the truck and the ground. Figure 3 also shows a platform 20 for the driver and a shaft 25 for pivotally attaching the platform to the truck.

The platform comprises two attachment means 21 and 23 which each comprise a through going opening 22 and 24 through which the pivotal shaft 25 can be inserted.

The foot guard arrangement 30 comprises a foot guard 31 for protecting the feet of the driver of the truck when the driver operates e.g. steers the truck while walking on the ground behind the truck. The foot guard has a shape which corresponds to the rear section of the truck onto which the foot guard is arranged. The height of the foot guard is selected such that the foot guard in a lowered position essentially covers the gap between the housing of the truck and the floor so that the feet of the driver cannot enter into the gap.

As an example, the foot guard 31 is manufactured from rubber. It is a generally flat block which has upper and lower flat surfaces. In figure 3 upper surface 35 is visible, a corresponding not visible lower surface is denoted 34. The foot guard has an elongated straight midsection and curved ends. The lower front edge of the foot guard that is directed away from the driver is denoted 33. The thickness of the foot guard is selected such that the block is strong enough to prevent the feet of the driver from entering under the truck. In operation, if the truck is moved such that the foot guard bump into a foot or both feet of the driver, the foot guard pushes the foot or feet away from the truck. The thickness of the foot guard is preferably 40 - 70 mm, ideally 50 mm.

The foot guard arrangement 30 further comprises a foot guard housing 32. The housing 32 comprise a lower portion that is dimensioned to fully receive the foot guard 31, i.e. the foot guard housing 32 defines a space 40 for the foot guard 31.

The upper portion of the foot guard housing 32 comprises two shaft attachment means 41 and 42. Each shaft attachment means comprises an opening for receiving an end portion of the shaft 25 for the platform. Figure 3 shows one opening 48 in shaft attachment means 42, however a similar opening is also comprised in shaft attachment means 41. Each shaft attachment means 41 and 42 further comprises openings 46, 47 for attaching the foot guard housing to the truck, for example by bolts. The foot guard housing 32 also comprises a central shaft support 43 for supporting a central portion of the shaft 25 for the platform. The central support 43 further comprises a locking element 44 for locking a platform shaft that is supported on the support 43. Some or all of the above described parts of the foot guard housing may be formed in one piece, i.e. by moulding. The parts may also be attached to each other e.g. by bolts or rivets.

The shaft 25 is dimensioned, i.e. its length and diameter so that each end of the shaft can be received in the openings in the shaft attachment means 41 and 42. In this embodiment, the shaft 25 comprises two sleeves 27, 29 that are rotatable around the shaft 25. As will be described in more detail below, the shaft 25 and the sleeves 27, 29 are inserted through the openings in the attachments 21, 23 of the platform so that the platform can rotate with the sleeves around the shaft. However, it is also possible to omit the sleeves 27 and 29 and attach the platform 20 and other parts of the guard assembly directly onto shaft 25. In this case, the openings in the shaft attachment means 41, 42 are circular and may comprise bearings. The end portions of shaft 25 have corresponding circular cross sections so that shaft 25 can be rotatable arranged in the circular openings in the shaft attachment means 41, 42 (this is not shown in the figures). A spring means 26, i.e. one or several helical springs may be provided for returning the shaft after turning.

The foot guard arrangement 30 further comprises coupling means 54, 55, 58, 59 for coupling the foot guard 31 to the shaft 25. According to one example, the coupling means comprises two gear wheels 54, 55 which each comprise a through going opening 56 and 57 through which the shaft 25 can be inserted. The coupling means further comprises two racks 58, 59 for engaging with the gear wheels. The toothed racks 58, 59 are two straight bars. One side of each bar is flat and the other side of each bar is provided with teeth. The teeth and the spaces between the teeth of the gear wheels and the teeth of the racks are dimensioned so that they are complementary with each other. That is, a tooth on a rack can enter into the space between two teeth on a gear wheel and vice versa.

Instead of toothed gears and racks it is also possible to achieve the coupling with wheels and bars that are provided with friction surfaces.

As mentioned above, the backside of each rack is flat, by "backside" is intended the side of the racks that faces away from the platform. Therefore, when the foot guard arrangement is mounted on the truck, the flat side of each rack is pressed in a slideable manner against the chassis of the truck. The foot guard is thereby secured against movement in directions other than vertical.

The racks and the gear wheels are dimensioned such that the foot guard is fully retracted into the housing 32 by the rotational movement of the sleeves 27, 29 or the shaft 25 when the platform is lowered. The racks and the gear wheels are also dimensioned such that the foot guard is lowered to a position where it essentially covers the gap between the truck and the ground when the platform is swung into a raised position. This is for example achieved by suitable dimensioning of the teeth and the spacing between the teeth of the gears and the racks.

It is obvious that the foot guard and/or the racks and the drive wheels are dimensioned such that the clearance between the foot guard and the ground is large enough to allow the truck to be run on inclined surfaces, for example on ramps into lorries or over doorsteps. However the clearance is always small enough to prevent the feet of the driver to be pinched under the truck.

If the inventive truck runs on a surface with very high inclination the foot guard may touch the inclined surface which causes wear to the foot guard. This is particularly the case in the transition zone between a horizontal surface and the inclined surface. When the inventive truck encounters such a zone the lower surface 34 of the foot guard, i.e. that is facing the inclined surface, is subjected to an upwards directed force from the underlying floor surface. However, the inventive coupling of the foot guard then permits the foot guard to slide upwards and does thus not restrain or hinder movement of the truck on the inclined surface.

It is hereby appreciated that the foot guard and its coupling to the platform as well as the platform itself, i.e. its weight and spring means are suitably dimensioned. Thus, such that when the foot guard hits an object, such as a foot, in a horizontal direction it protects the foot from being overrun and such that when the lower surface of the foot guard is subjected to an upwards vertical force it slides upwards. Due to the coupling to the platform the platform then swings out a few degrees.

The lower front edge 33 of the foot guard may be bevelled, for example by 15°. When a truck with a bevelled foot guard is driven in the forward direction and encounters a minor object, such as small debris or a low doorstep, the bevelling permits the object to pass under the foot guard whereby the foot guard is subjected to an upwards directed force to its lower surface. Due to the inventive coupling, the foot guard then slides upwards. In this case is by "case lower front edge" and "forward direction" intended the direction of the forks of the truck. It is appreciated that the side of the foot guard that faces the driver on the ground is not bevelled so that the foot guard protects the feet of the driver.

The racks 58, 59 are attached to the foot guard 31, e.g. on the concave side of the curved foot guard. This can be achieved in different ways, e.g. the racks and the foot guard may be formed in one piece by moulding. The racks could also be welded to the foot guard or attached by bolts or rivets.

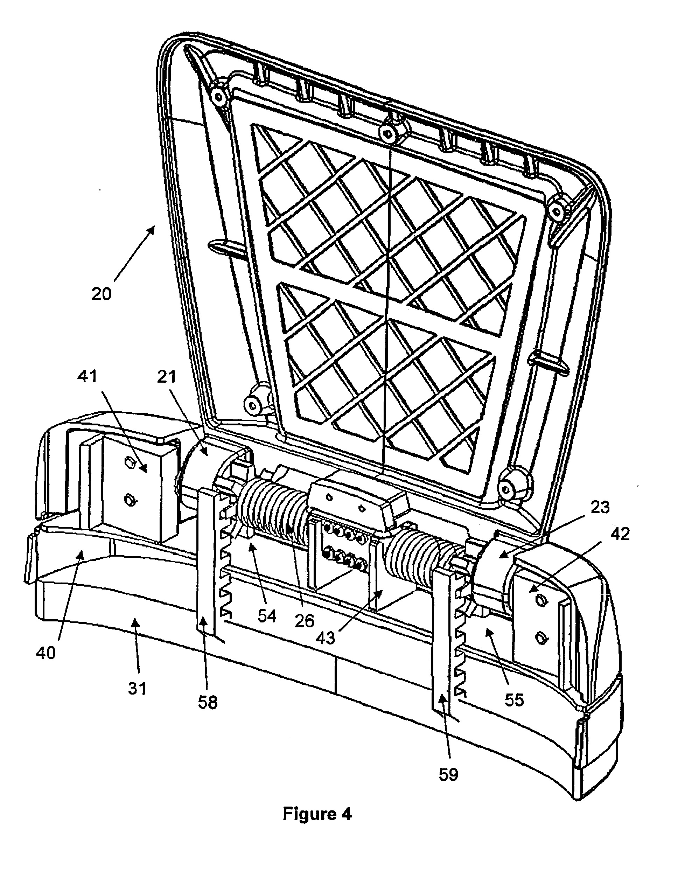

Figure 4 shows the platform and the assembled foot guard arrangement. The platform 20 is attached to the shaft 25, i.e. the shaft 25 and the rotatable sleeves 27, 29 are inserted through the openings in the attachment means 21 and 23 of the platform 20. The gear wheels are also slid onto the sleeves 27, 29. The platform and the gear wheels are firmly fixed to the rotatable sleeves 27, 29 of the shaft 25. This is for example achieved by press fitting of the parts or by mechanical fastening means such as bolts or screws. The parts could also be glued or welded onto the sleeves. As mentioned above the platform and the gears could also be attached directly to a rotatable arranged shaft 25.

Each end of the shaft is inserted into the openings in the shaft attachment means 41 and 42 (the openings are not shown in figure 4) and locked there. The spring means 26 is slid onto, and attached to, the sleeves 27, 29. Each end of the spring means 26 is further attached to the respective attachment means 41, 42 for the platform shaft 25. This causes the spring to tension when the sleeves are rotated around the shaft 25. When the sleeves 27, 29 are released after rotating, the spring relaxes and returns the shaft to the previous position.

The racks 58 and 59 are placed in engagement with the gear wheels 54 and 55, i.e. the teeth of the racks enters into the spaces between the teeth of the gear wheels and vice versa.

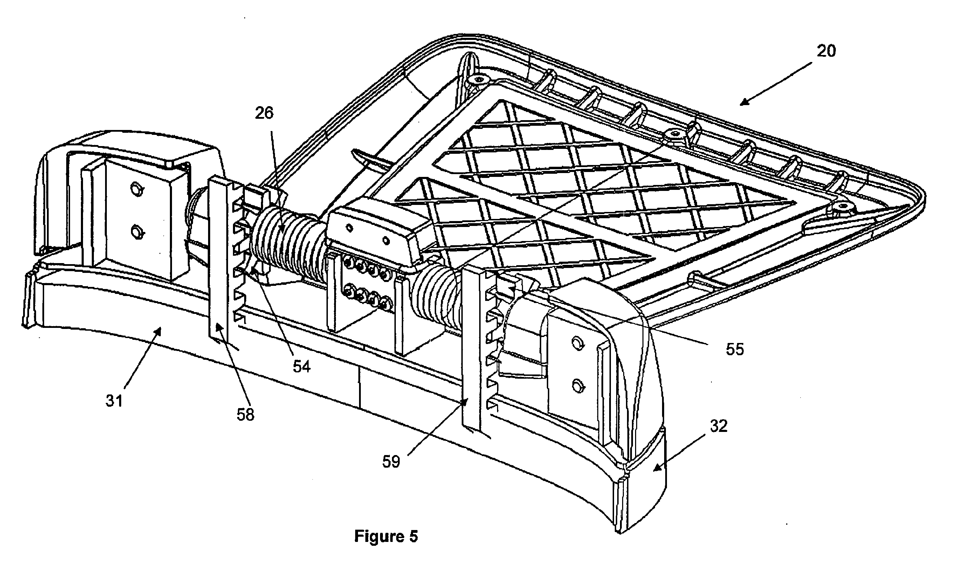

In the following will the operation of the foot guard assembly be described with reference to figures 4 and 5.

Figure 4 shows the platform in raised position. The foot guard is lowered and is in a position below the space 40 that is defined by the foot guard housing 32. The teeth on the upper portion of the racks 58 and 59 rest on the teeth of the gear wheels 54 and 55 so that foot guard is supported in the lowered position. When the platform is swung from the upright position of figure 4 to the lowered position shown in figure 5 the sleeves 27, 29 rotates around the shaft 25. The gear wheels 54, 55 that are firmly affixed onto the sleeves 27, 29 rotate together with the sleeves. The engagement between the gears 54, 55 and the racks 58, 59 causes the rotational movement of the gears to be transformed into a linear motion of the foot guard 31. The foot guard is therefore raised into the space 40 in the foot guard housing 32.

The swinging of the platform from the upper to the lower position causes the spring 26 that is attached to the sleeves and the shaft attachment means 41, 42 to tension. When the platform is released from the lowered position, i.e. the driver leaves the platform, the spring relaxes and forces the sleeves 27, 29 to turn whereby the platform is raised to the upper position. This rotational movement causes the foot guard to move linearly downwards into a position where it protects the feet of the driver.

Although a particular embodiment has been disclosed in detail this has been done for purpose of illustration only, and is not intended to be limiting. In particular it is contemplated that various substitutions, alterations and modifications may be made within the scope of the appended claims.

It is for instance possible to apply other coupling means for coupling the rotational movement of the pivotal shaft to the linear movement of the foot guard.

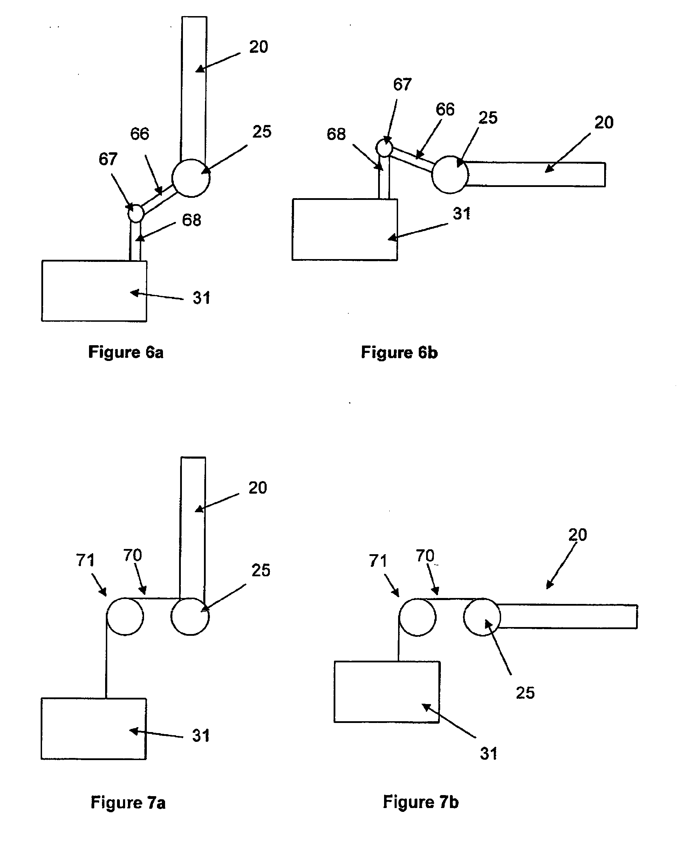

For example, a linkage could be provided between the shaft of the platform and the foot guard. In this embodiment, which is schematically shown in figure 6a, a first link 66 is attached to a rotatable shaft 25 to which the platform 20 is attached. A second link 68 is attached to the foot guard 31. The two links 66, 68 are coupled to each other in a pivotal joint 67, for example a bearing. Since figure 6a and 6b is a side view of the platform and the foot guard, only one linkage 66, 67, 68 visible, however a similar linkage is also provided on the other end of the shaft and the foot guard. When the platform 20 is lowered, see figure 6b, the first link 66 rotates with the shaft 25 and lifts the foot guard 31 to the raised position by the pivotal joint to the second link 68.

In another example, schematically shown in figure 7a, the foot guard 31 and shaft 25 for the platform are coupled by a cord 70. One end of the cord is attached to a rotatable shaft 25 by which the platform 20 is pivotally attached to an industrial truck (not shown). The other end of the cord 70 passes over a support shaft 71 and is attached to the foot guard 31. Since figure 7a and 7b is a side view of the platform and the foot guard, only cord 70 is visible, however an identical cord arrangement is also provided on the other end of the shaft and the foot guard. When the platform 20 is lowered, se figure 7b, the shaft 25 for the platform rotates. The cord 70 is thereby wound up onto the shaft 25 whereby the foot guard 31 is pulled up to the raised position.

It is also possible to arrange a small electric or hydraulic motor for raising or lowering of the foot guard. This can easily be achieved by the skilled person, for example by attaching the motor to the chassis of the truck and coupling the drive shaft of the motor to the foot guard e.g. with a gear assembly. In this case, it is preferable to arrange a position sensor, such as an electrical switch for detecting the position of the platform. The motor is connected to the switch or sensor such that the motor can be controlled to raise or lower the foot guard in dependency of the position of the platform.

The invention is further not limited to trucks that have pivotal platforms. It is also possible to arrange a movable foot guard on other types of trucks that can be operated by a driver on the ground or that rides on the truck. In such a truck, that for example has a fixed platform such as a booth for the driver, a presence sensor, for example a load sensor, may be arranged in the platform for detecting if a driver is present on the platform. The presence sensor is connected to an electrical or hydraulic motor that raises the foot guard if the presence sensor indicates that a driver is present on the platform and lowers the foot guard if the presence sensor indicates that no driver is present of the platform.

Instead of controlling the motor with sensors it is also possible to connect the motor for raising and lowering the foot guard to a control means, e.g. a button on truck. This enables the driver to manually raise or lower the foot guard by pressing the button.

In order to permit the foot guard to slide in the vertical direction when subjected to an upwards directed force to its lower surface the motor needs to be disengaged from the foot guard when the foot guard is in the lowered position. In a DC-electrical motor this is achieved by making the motor currentless. The output shaft of the motor is then freely rotatable and does not hinder the foot guard from sliding in the vertical direction. In the case of a hydraulic motor, a clutch arrangement could be provided between the motor and the foot guard.

## Claims

1. An industrial truck (1) comprising a driver's platform (20), wherein the truck can be operated by a driver from the platform (20) or from a position on the ground, further comprising a foot guard (31) for protecting the feet of the truck driver from being overrun or pinched by the truck, said foot guard having a shape which corresponds to the rear section of the truck onto which the foot guard is arranged, **characterized in that**, the foot guard (31) is movable between a first raised position and a second lowered position in which the foot guard protects the feet of the truck driver, wherein the height of the foot guard is selected such that the foot guard in the lowered position essentially covers the gap between the housing of the truck and the floor so that the feet of the driver cannot enter into the gap.

2. The industrial truck according to claim 1, wherein the platform (20) is pivotally attached to the truck by a shaft (25), so that the platform (20) is pivotal between an upright position and a horizontal position, whereby the foot guard (31) is coupled to the shaft (25) of the platform (20) such that the foot guard (31) is moved to the lowered position when the platform (20) is pivoted to the upright position and such that the foot guard (31) is moved to the raised position when the platform (25) is pivoted to the horizontal position.

3. The industrial truck (1) according to claim 2, wherein the foot guard (31) and the shaft (25) comprises corresponding coupling means (54, 56, 58, 59) for coupling the foot guard (31) to the shaft (25).

4. The industrial truck (1) according to claim 3, wherein the coupling means (54, 56, 58, 59) comprises intermeshing gears.

5. The industrial truck (1) according to claims 3 or 4, wherein the coupling means (54, 56, 58, 59) comprises at least one gear wheel (54, 55) arranged on the shaft (25) and at least one toothed bar (58, 59) arranged on the foot guard (31).

6. The industrial truck (1) according to claim 2 wherein the foot guard (31) is coupled to the shaft (25) by a linkage (66, 67, 68).

7. The industrial truck (1) according to claim 2, wherein the foot guard (31) is coupled to the shaft (25) by a cord (70).

8. The industrial truck (1) according to claim 1, comprising a presence sensor for detecting if a driver is present on the platform (20) and a motor arranged to move the foot guard (31) between the raised and lowered position in dependency of signals from the presence sensor.

9. The industrial truck (1) according to claim 1, wherein the platform (20) is pivotally attached to the truck, further comprising a position sensor for detecting the position of the platform (20) and a motor arranged to move the foot guard (31) between the raised and lowered position in dependency of signals from the position sensor.

10. The industrial truck (1) according to claim 1 comprising a motor arranged to move the foot guard (31) between the raised and lowered position and further comprising a control means that is connected to the motor so that the motor can be manually controlled by the driver.

11. The industrial truck according to any of claim 1 - 10, wherein the lower front edge (33) of the foot guard (31) is beveled.

12. The industrial truck (1) according to any of claim 1-11, wherein the foot guard (31) is arranged to slide in the vertical direction, when subjected to a vertical upwards directed force to its lower surface (34).

13. The industrial truck (1) according to any of claim 1 - 12, comprising a housing (32) that comprises a space (40) for receiving the foot guard (31).

## Patentansprüche

1. Flurförderer (1) mit einer Fahrerplattform (20), wobei der Förderer von der Plattform (20) oder von einer Position auf dem Boden aus durch einen Fahrer bedient werden kann, ferner mit einem Fußschutz (31) zum davor Schützen der Füße des Fördererfahrers, durch den Förderer überrannt oder eingeklemmt zu werden, wobei der Fußschutz eine Form aufweist, die mit dem hinteren Abschnitt des Förderers korrespondiert, auf dem der Fußschutz angeordnet ist, **dadurch gekennzeichnet, dass** der Fußschutz (31) zwischen einer ersten angehobenen Position und einer zweiten abgesenkten Position, in der der Fußschutz die Füße des Fördererfahrers schützt, bewegbar ist, wobei die Höhe des Fußschutzes so ausgewählt ist, dass der Fußschutz in der abgesenkten Position im Wesentlichen die Lücke zwischen dem Gehäuse des Förderers und dem Boden überdeckt, so dass die Füße des Fahrers nicht in die Lücke eindringen können.

2. Flurförderer nach Anspruch 1, bei dem die Plattform (20) durch eine Welle (25) schwenkbar an dem Förderer angebracht ist, so dass die Plattform (20) zwischen einer aufrechten Position und einer horizontalen Position verschwenkbar ist, wobei der Fußschutz (31) mit der Welle (25) der Plattform (20) gekoppelt ist, so dass der Fußschutz (31) in die abgesenkte Position bewegt wird, wenn die Plattform (20) in die aufrechte Position verschwenkt wird, und so dass der Fußschutz (31) in die angehobene Position bewegt wird, wenn die Plattform (25) in die horizontale Position verschwenkt wird.

3. Flurförderer (1) nach Anspruch 2, bei dem der Fußschutz (31) und die Welle (25) korrespondierende Kopplungsmittel (54, 56, 58, 59) zum Koppeln des Fußschutzes (31) mit der Welle (25) aufweisen.

4. Flurförderer (1) nach Anspruch 3, bei dem die Kopplungsmittel (54, 56, 58, 59) miteinander kämmende Zahnräder aufweisen.

5. Flurförderer (1) nach Anspruch 3 oder 4, bei dem die Kopplungsmittel (54, 56, 58, 59) mindestens ein an der Welle (25) angeordnetes Zahnrad (54, 55) und mindestens eine an dem Fußschutz (31) angeordnete Zahnstange (58, 59) aufweisen.

6. Flurförderer (1) nach Anspruch 2, bei dem der Fußschutz (31) mit der Welle (25) durch ein Koppelgetriebe (66, 67, 68) gekoppelt ist.

7. Flurförderer (1) nach Anspruch 2, bei dem der Fußschutz (31) mit der Welle (25) durch eine Schnur (70) gekoppelt ist.

8. Flurförderer (1) nach Anspruch 1, mit einem Anwesenheitssensor zum Erfassen, ob ein Fahrer auf der Plattform (20) anwesend ist, und einem Motor, der zum Bewegen des Fußschutzes (31) zwischen der angehobenen und abgesenkten Position, in Abhängigkeit von Signalen von dem Anwesenheitssensor, ausgebildet ist.

9. Flurförderer (1) nach Anspruch 1, bei dem die Plattform (20) schwenkbar an dem Förderer befestigt ist, der ferner einen Positionssensor zum Erfassen der Position der Plattform (20) und einen Motor aufweist, der zum Bewegen des Fußschutzes (31) zwischen der angehobenen und abgesenkten Position, in Abhängigkeit von Signalen des Positionssensors, ausgebildet ist.

10. Flurförderer (1) nach Anspruch 1, der einen Motor aufweist, der zum Bewegen des Fußschutzes (31) zwischen der angehobenen und abgesenkten Position ausgebildet ist, und ferner ein Steuermittel aufweist, das mit dem Motor verbunden ist, so dass der Motor manuell durch den Fahrer gesteuert werden kann.

11. Flurförderer nach einem der Ansprüche 1-10, bei dem die untere Vorderkante (33) des Fußschutzes (31) abgeschrägt ist.

12. Flurförderer (1) nach einem der Ansprüche 1-11, bei dem der Fußschutz (31) dazu ausgebildet ist, in der vertikalen Richtung zu gleiten, wenn er einer vertikal aufwärts ausgerichteten Kraft auf seine untere Fläche (34) unterworfen ist.

13. Flurförderer (1) nach einem der Ansprüche 1-12, mit einem Gehäuse (32), das einen Raum (40) zum Aufnehmen des Fußschutzes (31) aufweist.

## Revendications

1. Chariot de manutention (1) comprenant une plateforme conducteur (20), dans lequel le chariot peut être actionné par un conducteur à partir de la plateforme (20) ou à partir d'une position au sol, comprenant en outre un protège-pied (31) destiné à protéger les pieds du conducteur de chariot qui pourraient être écrasés ou pincés par le chariot, ledit protège-pied présentant une forme correspondant à la section arrière du chariot sur laquelle est agencé le protège-pied, **caractérisé en ce que** le protège-pied (31) est mobile entre une première position relevée et une seconde position abaissée dans laquelle le protège-pied protège les pieds du conducteur du chariot, dans lequel la hauteur du protège-pied est sélectionnée de telle sorte que le protège-pied, dans la position abaissée, couvre sensiblement l'intervalle entre la carrosserie du chariot et le plancher de telle sorte que les pieds du conducteur ne puissent pas pénétrer dans l'intervalle.

2. Chariot de manutention selon la revendication 1, dans lequel la plateforme (20) est fixée de manière pivotante sur le chariot par un arbre (25), de telle sorte que la plateforme (20) puisse pivoter entre une position verticale et une position horizontale, grâce à quoi le protège-pied (31) est couplé à l'arbre (25) de la plateforme (20) de telle sorte que le protège-pied (31) soit déplacé vers la position abaissée lorsque la plateforme (20) pivote vers la position verticale et de telle sorte que le protège-pied (31) soit déplacé vers la position relevée lorsque la plateforme (25) pivote vers la position horizontale.

3. Chariot de manutention (1) selon la revendication 2, dans lequel le protège-pied (31) et l'arbre (25) comprennent un moyen de couplage correspondant (54, 56, 58, 59) destiné à coupler le protège-pied (31) et l'arbre (25).

4. Chariot de manutention (1) selon la revendication 3, dans lequel le moyen de couplage (54, 56, 58, 59) comprend des engrenages qui s'engrènent.

5. Chariot de manutention (1) selon la revendication 3 ou 4, dans lequel le moyen de couplage (54, 56, 58, 59) comprend au moins une roue dentée (54, 55) agencée sur l'arbre (25) et au moins une crémaillère (58, 59) agencée sur le protège-pied (31).

6. Chariot de manutention (1) selon la revendication 2, dans lequel le protège-pied (31) est couplé à l'arbre (25) par une tringlerie (66, 67, 68).

7. Chariot de manutention (1) selon la revendication 2, dans lequel le protège-pied (31) est couplé à l'arbre (25) par une corde (70).

8. Chariot de manutention (1) selon la revendication 1, comprenant un capteur de présence destiné à détecter si un conducteur est présent sur la plateforme (20) et un moteur agencé de façon à déplacer le protège-pied (31) entre les positions relevée et abaissée en fonction des signaux provenant du capteur de présence.

9. Chariot de manutention (1) selon la revendication 1, dans lequel la plateforme (20) est fixée de manière pivotante sur le chariot, comprenant en outre un capteur de position destiné à détecter la position de la plateforme (20) et un moteur agencé de façon à déplacer le protège-pied (31) entre les positions relevée et abaissée en fonction des signaux provenant du capteur de position.

10. Chariot de manutention (1) selon la revendication 1, comprenant un moteur agencé de façon à déplacer le protège-pied (31) entre les positions relevée et abaissée et comprenant en outre un moyen de commande qui est connecté au moteur de telle sorte que le moteur puisse être commandé manuellement par le conducteur.

11. Chariot de manutention selon l'une quelconque des revendications 1 à 10, dans lequel le bord avant inférieur (33) du protège-pied (31) est biseauté.

12. Chariot de manutention (1) selon l'une quelconque des revendications 1 à 11, dans lequel le protège-pied (31) est agencé de façon à glisser dans la direction verticale, quand il est soumis à une force verticale dirigée vers le haut sur sa surface inférieure (34).

13. Chariot de manutention (1) selon l'une quelconque des revendications 1 à 12, comprenant un logement (32) qui comprend un espace (40) destiné à recevoir le protège-pied (31).
